(19) Europäisches Patentamt
European Patent Office
Office européen des brevets

(11) Publication number: **0 017 451**
**A1**

# (12) EUROPEAN PATENT APPLICATION

(21) Application number: 80300991.9

(22) Date of filing: 28.03.80

(51) Int. Cl.$^3$: **B 01 F 3/04**

(30) Priority: 30.03.79 US 25303

(43) Date of publication of application: 15.10.80 Bulletin 80/21

(84) Designated Contracting States: DE FR GB

(71) Applicant: CHEMINEER INC.
P.O. Box 1123
Dayton, Ohio 45401(US)

(72) Inventor: Donaldson, Charles B.
223 Western Avenue
Brookville Ohio(US)

(74) Representative: Warren, Anthony Robert et al,
BARON & WARREN 16, Kensington Square
London W8 5HL(GB)

## (54) Apparatus and method for producing a gas in liquid dispersion.

(57) The present invention relates to a method and apparatus for producing gas-liquid dispersions in which a motionless mixing device is used to replace or operate in conjunction with a gas sparge ring in an impeller agitator system.

In one embodiment, gas and liquid are fed through conduits (16, 18, 20, 22) containing associated motionless mixers (24, 26, 28, 30) to predisperse the two phases. The dispersion is injected into the bottom of a tank (11) containing an impeller agitator (12) which maintains the dispersion for a time sufficient for mass transfer to occur. Significantly less power is required for the impeller agitator (12) to maintain the dispersion produced by the motionless mixers (24, 26, 28, 30) than is required to produce an equivalent level of dispersion with an impeller agitator operating with a gas sparge ring alone.

FIG-I

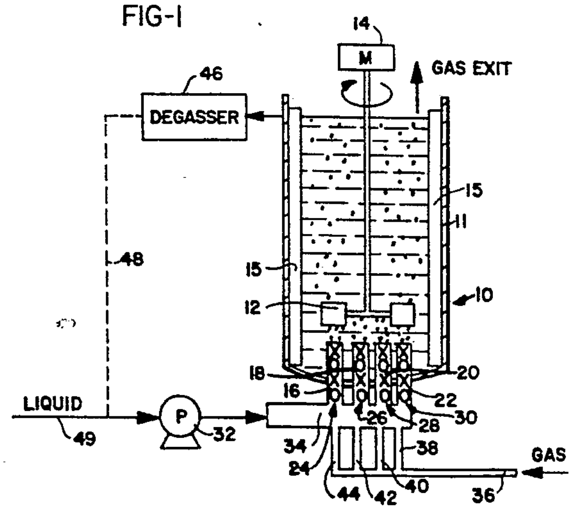


EP 0 017 451 A1

# APPARATUS AND METHOD FOR PRODUCING A GAS IN LIQUID DISPERSION

This invention relates generally to dispersing gases into liquids, and more particularly to a method and apparatus for the more efficient production of gas-liquid dispersions.

The creation of gas in liquid dispersions for such physical mass transfer phenomena as absorption, in which a soluble component of a gas mixture is dissolved in a liquid, and stripping, in which a gas dissolved in a liquid phase is transferred to a gas, plays an important role in diverse chemical operations. Examples of industrial applications requiring the dispersion of a gas into a liquid phase are the oxidation of organic aromatic hydrocarbons such as cyclohexane to cyclohexanone, the hydrogenation of unsaturated glycerides, fermentations carried out under aerobic conditions for the production of antibiotics, steroids, and single-cell proteins, the oxidation of biological wastes, and the oxidation or other chemical reaction with suspended particulate solids such as the oxidation of calcium sulfite to calcium sulfate. Many of these industrial applications also involve suspensions of solids in the liquid phase. Dispersions of a gas in a liquid not only bring about a large increase in the interfacial surface area available for mass transfer, but also place the two phases in a state of motion which serves to increase the rate of mass transfer between phases.

The prior art has utilized several different methods and apparatuses for producing gas-in-liquid dispersions, with the particular method and apparatus utilized being dependent upon a number of factors including the difficulty in creating the dispersion, the size and size distribution of gas bubbles needed

for optimum mass transfer, the time required for the transfer to occur, and the cost of purchasing and operating the dispersing equipment. The simplest method of dispersing a gas in a liquid contained in a tank is to introduce the gas through a perforated plate or pipe sparger located in the bottom of the tank. However, for most chemical processes, a simple sparge ring gives inadequate gas-liquid contacting and relatively poor mixing. An impeller-type agitator must be introduced into the tank to disperse the gas bubbles through the liquid phase and to provide the agitation necessary for good mixing.

Such impeller-type agitators must not only create sufficient turbulence to disperse the gas bubbles evenly throughout the tank, but also actually break up the gas bubbles into smaller sizes to provide a larger interfacial area and promote liquid motion for mass transfer. Use of very small diameter hole spargers or porous plate spargers to create an initial small bubble size is impractical in many cases since unacceptably large pressure drops are caused requiring increased power consumption to pump the gas through the sparger. Such devices also tend to plug up. Additionally, impeller-type agitators provide substantial backmixing even for continuous processes and therefore are used in most instances in batch-type operations.

The use of motionless mixers to create gas-in-liquid dispersions has also been used in the prior art. These motionless mixers, so-called because they have no moving parts, consist of a series of vanes or baffle-like elements placed in a conduit which serve to create turbulence and to divide and recombine a stream flowing through such conduit. Examples of such motionless mixers are Armeniades et al, U. S. patent No. 3,286,992, Grout et al, U. S. patent No. 3,704,006, and Chisholm, U. S. patent No. 3,652,061. Such mixers

have the advantage of producing a very narrow range of drop sizes which creates intimate contacting of the gas and liquid phases and optimizes mass transfer. However, because of the relatively short residence time in such mixers, they are utilized primarily in continuous flow operations where mass transfer is rapid.

Accordingly, the need still exists in the art for an apparatus which can efficiently produce and maintain a gas-in-liquid dispersion with a minimum of power input and yet is easily adaptable for use in either continuous flow or batch operations.

In accordance with the present invention a motionless mixing device is provided in combination with an impeller agitator to disperse a gaseous phase into a liquid phase. The motionless mixer is designed to take the place of, or be used in addition to, a gas sparge ring or other gas distribution assembly in an impeller agitated tank for gas-liquid contacting. In one embodiment, the discharge outlet of the motionless mixer is located as near as possible to the impeller in the agitated tank, and preferably extends a short distance into the tank to minimize any coalescence of the dispersion prior to entry into the tank.

Surprisingly, it has been found that the combination of the motionless mixer and impeller agitator is much more efficient than either device used separately. In other words, much less power is required for an impeller agitator to maintain the dispersion produced by the motionless mixer than is required to produce an equivalent level of dispersion with the impeller agitator operating with a standard gas sparge ring alone. Depending upon the particular gas-liquid system and the equipment

parameters, the power requirements for the impeller agitator-motionless mixer combination may be as little as 40-50% of the power required using a standard impeller agitator with sparge ring.

In operation, liquid is supplied through a conduit by a conventional pump to the motionless mixer located at or near the inlet at the base of the agitated tank. Immediately upstream of the motionless mixer is a gas inlet where gas under pressure may be injected into the liquid stream. The gas-liquid mixture is conveyed through the motionless mixer where a gas-in-liquid dispersion is produced, and the dispersion then enters the agitated tank. An impeller of conventional design is used to agitate the liquid in the tank and maintain the dispersion for a residence time sufficient for mass transfer between the phases to occur. The residence time in the agitated tank varies depending upon the mass transfer and chemical reaction characteristics of the particular gas-liquid system.

In an alternative embodiment, the main liquid supply conduit may have a plurality of smaller conduits branching therefrom, with each branch containing a motionless mixing device. In this manner, the gas-liquid dispersion is introduced into the agitated tank at several locations simultaneously to improve the fluid distribution and mixing in the tank. A plurality of gas inlets is also provided at or near the entrance to each branch conduit.

The combination of the motionless mixer with an impeller agitator creates a flexible system which may be operated in either a batch or continuous flow mode. In continuous flow operation, the liquid and gas feed are combined immediately upstream of

one or more motionless mixers, dispersed, and fed into the impeller agitated tank. Generally, the gas is permitted to escape from the tank, and liquid product is removed from an outlet typically located near the top of the tank. In batch operation, the product liquid is pumped through an external recycle loop where it is combined with gas feed, dispersed in the motionless mixer, and returned to the impeller agitated tank where the dispersion is maintained. In both flow schemes, an additional tank or other separation device such as a centrifuge or baffled settling tank may be placed in the system to permit more complete separation of gas and liquid prior to recycle and pumping of the product liquid.

The gas-liquid contacting method and apparatus embodying the invention is flexible in that it can be operated efficiently in either a continuous flow or batch mode. A level of dispersion can be provided and maintained which is conducive to optimum mass transfer between the gas and liquid phases with a lower power requirement than prior art processes and apparatuses.

In order that the invention may be more readily understood, reference will now be made to the accompanying drawings, in which:-

Fig. 1 is a schematic representation of a motionless mixer-impeller agitator combination embodying the present invention, with an optional recycle line being illustrated in broken lines;

Fig. 2 is a schematic representation of another embodiment of the motionless mixer-impeller agitator combination of the present invention; and

Fig. 3 is a top view of a typical impeller arrangement illustrating the possible locations of inlets to the agitated tank.

As shown in Fig. 1, an impeller agitator 10 with a tank 11 having an impeller 12 driven by motor 14 or a conventional geared agitator drive is provided to maintain the gas-liquid dispersion. Baffles 15, positioned around the edge of the tank, prevent undesirable swirl and create efficient mixing and dispersion throughout the tank. The impeller agitator is of a design conventional in the art and may be either a radial flow or axial flow device. The impeller itself may be a plurality of paddle blades, a propeller, or a turbine-like device. It is within the scope of the invention for the impeller to enter the tank from an angle or even through an opening in the side of the tank. However, in place of the standard gas sparging device in the bottom of the tank, a plurality of conduits 16, 18, 20, and 22 are provided. These conduits could also be positioned around the sides of the tank. These conduits contain motionless mixing devices 24, 26, 28, and 30, and the conduits preferably extend at least a short distance into tank 11. Alternatively, the motionless mixing devices should be positioned as closely as possible to the points at which the dispersion enters tank 11. It is also within the scope of this invention for the motionless mixing devices to be used in conjunction with a gas sparger to complement the functioning of the sparger. Of course, maximum power savings are realized when the motionless mixing device completely replaces the gas sparger.

Liquid is supplied from an external source through line 49 to pump 32. It is then passed to conduit 34 to which conduits 16, 18, 20, and 22 are connected. Gas under pressure is supplied through conduit 36 which branches into a plurality of smaller conduits 38, 40, 42, and 44. These conduits are in fluid connection with liquid carrying conduit 34 and serve to inject gas into that conduit immediately upstream from motionless mixing devices 24, 26, 28, and 30 in conduits 16, 18, 20, and 22. Although Fig. 1 illustrates gas being injected immediately upstream of the mixer, almost any arrangement where gas and liquid are supplied to the motionless mixer would create an adequate dispersion. The mode of injecting gas into the liquid will vary from system to system depending upon the particular gases and liquids utilized and any structural limitations required in the installation of the gas and liquid conduits.

Although Fig. 1 illustrates an arrangement utilizing four separate conduits containing motionless mixing elements, both the number of conduits and the number of motionless mixing elements in each conduit may be varied according to the individual requirements of the particular gas-liquid system being utilized. These requirements will include such factors as relative sizing of equipment, ease of dispersion, mutual solubilities of the gas and liquid, rates of reaction, mass transfer and heat transfer, and relative volumes of gas and liquid needed. For a relatively small volume tank and a relatively easy to disperse gas-liquid system, a single conduit containing from two to eight motionless mixer elements may be sufficient such as the embodiment illustrated in Fig. 2. As shown in Fig. 2, motionless mixing

device 24 is positioned in conduit 16 which leads to inlet 17 in tank 11.

In the embodiment illustrated in Fig. 3 are several possible dispersion inlet configurations. In tank 11 is an eight-bladed impeller 12 supported on rotating shaft 13. Depending upon the particular gas-liquid system, a single inlet (equivalent to 17 in Fig. 2) positioned directly beneath impeller 12 may be sufficient. Another possible configuration is symmetrically to position a series of inlets 50 around the circumference of a circle centered beneath shaft 13 and having a diameter less than the diameter of impeller 12. Still another possible configuration is illustrated by inlets 52, positoned beyond the diameter of impeller 12. In this latter embodiment the entering dispersion would be caught up in the radial-flow currents created by the action of impeller 12 and distributed throughout tank 11.

The motionless mixer elements are preferably of the structure taught by Armeniades et al, U. S. patent No. 3,286,992, and Grout et al, U. S. patent No. 3,704,006. They preferably consist of sheet like elements extending longitudinally within the conduit, each having a curvature to turn the direction of fluid flowing past the elements. The elements are preferably arranged in the conduit in alternating left- and right-handed curvature groups (a group consisting of one or more elements) with the leading and trailing edges of adjacent elements being disposed at a substantial angle, such as 90°, with respect to each other. Alternatively, any other turbulence promoting, pipe-like flow through device having substantially plug flow characteristics and capable of creating the desired degree of dispersion could be utilized.

In operation, liquid feed is pumped through conduit 34 where it is mixed with gas feed injected through conduits 38-44. The liquid and gas feeds then enter conduits 16-22 where the motionless mixing elements contained therein produce a gas-in-liquid dispersion which enters the bottom of tank 11. Impeller 12, shown schematically in Figs. 1 and 3 as a multi-bladed impeller but which may be any other suitable axial or radial flow creating device, is then rotated at a speed sufficient to maintain the dispersion produced by the motionless mixing elements.

Tank 11 is sized to provide sufficient residence time for mass transfer to occur between the phases and to provide substantial backmixing of the gas and liquid. Liquid is typically removed from the top of tank 11 through an overflow conduit or the like while gas escapes from the surface of the liquid and leaves the tank. The gas may be captured and either recycled or further processed if it contains a valuable component. The liquid drawn off from tank 11 may be sent to an optional degassing chamber 46 where any residual gases are separated. For most gas-liquid dispersions, a quiescent settling tank will be sufficient for the removal of any remaining gas in the liquid phase. Alternatively, a baffled settler or centrifuge may be utilized. If the system is designed for batch operation, the liquid is then recycled via conduit 48 to pump 32. From pump 32, the liquid is sent to conduit 34 where fresh gas feed is injected, and the liquid and gas are dispersed again. This procedure may be repeated as many times as required by the particular gas-liquid system utilized.

The following nonlimiting example is illustrative of the present invention.

Example 1

An experimental motionless mixer-impeller agitator system substantially similar to the system illustrated schematically in Fig. 2 was constructed to observe the effects of agitator speed and the use of a motionless mixer on gas-liquid dispersions. Water was used as the liquid phase and air used as the gaseous phase. The conduits and tank were fabricated from clear plastic so that the various dispersions could be observed easily.

The tank was 29.21cm. (11.5 inches) in diameter and had a liquid depth of 30.48cm. (12 inches). The impeller was a 6-bladed, disc-style turbine with a 4 inch diameter. The motionless mixer consisted of a 6 element Kenics Static Mixer (trademark) nine inches in length, available from the Kenics Corp., North Andover, Massachusetts. The outlet of the mixer was located 40.64cm. (16 inches) from an inlet at the base of the tank. The tank also contained a conventional circular gas sparge ring located near the bottom of the tank.

The system was operated in two different modes. In the first mode, the impeller agitated tank was operated conventionally with gas entering through the gas sparge ring below the rotating impeller. In this mode, dispersion of the gas must be accomplished by the action of the impeller. In the second mode, the sparge ring was disconnected and the motionless mixer was used to predisperse the gas and liquid. As the dispersion entered the bottom of the tank, the rotating impeller distributed and maintained the dispersion throughout

the tank. Visual observation was used to gauge the various levels of dispersion. At least five distinct levels could be observed as: (a) little or no dispersion, (b) sufficient dispersion for the upper part of the tank to act as a bubble column, (c) gas circulation in the tank above the impeller with some movement below the impeller, (d) circulation of gas throughout the tank, including gas bubbles driven below the impeller, and (e) uniform dispersion of small bubbles throughout the tank. Although the observations were not quantitative, they were quite sufficient to enable accurate comparison of the various levels of gas dispersion.

Several different runs were made using different agitator speeds, gas flow rates, and liquid flow rates. The results were as reported below in Tables I - III.

Table I

COMPARISON OF CONVENTIONAL GAS DISPERSION WITH STATIC MIXER PREDISPERSION FOR SAME CONDITIONS IN AGITATED TANK

| | CONVENTIONAL SPARGE RING | | STATIC MIXER PREDISPERSION | | | | |
|---|---|---|---|---|---|---|---|
| | Agitated Gas/Liquid Dispersion | | Agitated Gas/Liquid Dispersion | | | Dispersion | Comments |
| Run # | Agitator Speed (rpm) | Gas Flow Rate (scmm) | Agitator Speed (rpm) | Gas Flow Rate (scmm) | Liquid Flow Velocity (m/sec) | Comparison | |
| 1 | 270 | 0.0133 | 270 | 0.0133 | 0.762 | Equal dispersion | Slight differences in dispersion, neither better |
| 2 | 270 | 0.0266 | 270 | 0.0266 | 0.762 | Equal dispersion | Slightly gas distribution with sparge ring |
| 3 | 270 | 0.0399 | 270 | 0.0399 | 0.762 | Equal dispersion | Impeller flood in both cases, better gas distribution above impeller with static mixer |
| 4 | 270 | 0.0133 | 270 | 0.0133 | 1.0668 | Predispersion better | Static Mixer creates more small bubbles |
| 5 | 270 | 0.0266 | 270 | 0.0266 | 1.0668 | Equal dispersion | No observable difference |
| 6 | 270 | 0.0399 | 270 | 0.0399 | 1.0668 | Predispersion better | Flooded impeller with sparge ring, good dispersion with static mixer |

Table I - continued

| | Agitated Gas/Liquid Dispersion | | Agitated Gas/Liquid Dispersion | | | Dispersion | Comments |
|---|---|---|---|---|---|---|---|
| Run # | Agitator Speed (rpm) | Gas Flow Rate (scmm) | Agitator Speed (rpm) | Gas Flow Rate (scmm) | Liquid Flow Velocity (m/sec) | Comparison | |
| 7 | 270 | 0.0133 | 270 | 0.0133 | 1.3716 | Predispersion better | Smaller bubbles seen with static mixer, better gas distribution below impeller |
| 8 | 270 | 0.0266 | 270 | 0.0266 | 1.3716 | Predispersion better | Smaller bubbles seen with static mixer, more uniform dispersion with static mixer |
| 9 | 270 | 0.0399 | 270 | 0.0399 | 1.3716 | Predispersion better | Flooded impeller with sparge ring, good dispersion with static mixer |
| 10 | 360 | 0.0133 | 360 | 0.0133 | 0.762 | Equal dispersion | Good gas dispersion with both systems, no observable difference |
| 11 | 360 | 0.0266 | 360 | 0.0266 | 0.762 | Equal dispersion | Good gas dispersion with both systems, no observable difference |

Table I - continued

| | Agitated Gas/Liquid Dispersion | | Agitated Gas/Liquid Dispersion | | | Dispersion | Comments |
|---|---|---|---|---|---|---|---|
| Run # | Agitator Speed (rpm) | Gas Flow Rate (scmm) | Agitator Speed (rpm) | Gas Flow Rate (scmm) | Liquid Flow Velocity (m /sec) | Comparison | |
| 12 | 360 | 0.0399 | 360 | 0.0399 | 0.762 | Equal dispersion | Good gas dispersion with both systems, no observable difference |
| 13 | 360 | 0.0133 | 360 | 0.0133 | 1.0668 | Equal dispersion | Slightly better dispersion with static mixer |
| 14 | 360 | 0.0266 | 360 | 0.0266 | 1.0668 | Predispersion better | More small bubbles below impeller with static mixer, similar dispersion above impeller |
| 15 | 360 | 0.0133 | 360 | 0.0133 | 1.0668 | Equal dispersion | No observable difference |

Table II

COMPARISON OF CONVENTIONAL GAS DISPERSION WITH STATIC MIXER PREDISPERSION FOR SAME CONDITIONS IN AGITATED TANK

| | CONVENTIONAL SPARGE RING | | STATIC MIXER PREDISPERSION | | | | |
|---|---|---|---|---|---|---|---|
| | Agitated Gas/Liquid Dispersion | | Agitated Gas/Liquid Dispersion | | | Dispersion | Comments |
| Run # | Agitator Speed (rpm) | Gas Flow Rate (scmm) | Agitator Speed (rpm) | Gas Flow Rate (scmm) | Liquid Flow Velocity (m/sec) | Comparison | |
| 16 | 360 | 0.0133 | 360 | 0.0133 | 1.3716 | Predispersion better | More small bubbles below impeller, similar dispersion above impeller |
| 17 | 360 | 0.0266 | 360 | 0.0266 | 1.3716 | Predispersion better | More small bubbles below impeller, similar dispersion above impeller |
| 18 | 360 | 0.0399 | 360 | 0.0399 | 1.3716 | Predispersion better | More small bubbles below impeller, similar dispersion above impeller |

Table III

COMPARISON OF CONDITIONS IN AGITATED TANK REQUIRED TO CREATE DISPERSION EQUIVALENT TO STATIC MIXER PREDISPERSION FOR SAME GAS FLOW RATE

| | CONVENTIONAL SPARGE RING | | STATIC MIXER PREDISPERSION | | | |
|---|---|---|---|---|---|---|
| | Agitated Gas/Liquid Dispersion | | Agitated Gas/Liquid Dispersion | | | |
| Run # | Agitator Speed (rpm) | Gas Flow Rate (scmm) | Agitator Speed (rpm) | Gas Flow Rate (scmm) | Liquid Flow Velocity (m/sec) | Comments |
| 19 | 270 | 0.0133 | 270 | 0.0133 | 0.762 | Both dispersion essentially equivalent |
| 20 | 340 | 0.0133 | 270 | 0.0133 | 0.762 | Sparge ring dispersion better |
| 21 | 340 | 0.0133 | 270 | 0.0133 | 1.0668 | Both dispersions essentially equivalent, sparge ring slightly better |
| 22 | 360 | 0.0133 | 270 | 0.0133 | 1.0668 | Sparge ring definitely better |
| 23 | 380 | 0.0133 | 270 | 0.0133 | 1.0668 | Sparge ring considerably better |
| 24 | 340 | 0.0133 | 270 | 0.0133 | 1.3716 | Both dispersions equivalent |
| 25 | 360 | 0.0133 | 270 | 0.0133 | 1.3716 | Sparge ring better |
| 26 | 270 | 0.0266 | 270 | 0.0266 | 0.762 | Sparge ring equivalent to slightly better |
| 27 | 340 | 0.0266 | 270 | 0.0266 | 0.762 | Sparge ring definitely better |
| 28 | 270 | 0.0266 | 270 | 0.0266 | 1.0668 | Both dispersions equivalent |
| 29 | 340 | 0.0266 | 270 | 0.0266 | 1.0668 | Sparge ring definitely better |
| 30 | 340 | 0.0266 | 270 | 0.0266 | 1.3716 | Both dispersions equivalent |
| 31 | 360 | 0.0266 | 270 | 0.0266 | 1.3716 | Sparge ring marginally better |
| 32 | 270 | 0.0399 | 270 | 0.0399 | 1.0668 | Sparge ring flooded, good dispersion with static mixer |
| 33 | 360 | 0.0399 | 270 | 0.0399 | 1.0668 | Sparge ring marginally better |

Table III - continued

| -- | Agitated Gas/Liquid Dispersion | | Agitated Gas/Liquid Dispersion | | | |
|---|---|---|---|---|---|---|
| Run # | Agitator Speed (rpm) | Gas Flow Rate (scmm) | Agitator Speed (rpm) | Gas Flow Rate (scmm) | Liquid Flow Velocity (m /sec) | Comments |
| 34 | 360 | 0.0399 | 270 | 0.0399 | 1.3716 | Both dispersions equivalent |
| 35 | 380 | 0.0399 | 270 | 0.0399 | 1.3716 | Sparge ring marginally better, more small bubbles |
| 36 | 380 | 0.0133 | 360 | 0.0133 | 1.3716 | Both dispersions equivalent |
| 37 | 450 | 0.0133 | 360 | 0.0133 | 1.3716 | Sparge ring clearly better |
| 38 | 380 | 0.0266 | 360 | 0.0266 | 1.3716 | Both dispersions equivalent |
| 39 | 450 | 0.0266 | 360 | 0.0266 | 1.3716 | Sparge ring clearly better |
| 40 | 380 | 0.0399 | 360 | 0.0399 | 1.3716 | Both dispersions equivalent |
| 41 | 450 | 0.0399 | 360 | 0.0399 | 1.3716 | Sparge ring better |

As can be seen, the most significant differences between the conventional and predispersion conditions were observed at 270 RPM and 0.0399 standard cubic metres per minute (1.41 scfm) gas rate when the liquid velocity through the motionless mixer was 1.0668 and 1.3716m/sec (3.5 and 4.5 ft/sec) (Runs 6 and 9). In both cases, the conventional system was flooded (level (a)) while the predispersion system showed adequate dispersion (level (c)). These differences are important since a flooded condition is an unacceptable system design.

Runs were also made to determine what increases in impeller speed were required to achieve a level of dispersion with the sparge ring which was equivalent to the combined motionless mixer-impeller agitator system. Any increase in the impeller speed requires additional power input in accordance with the equation:

$$H_p = K\,({}^{P}/{P_o})\ d\ N^3 D^5$$

where $H_p$ = prime-mover power, ${}^{P}/{P_o}$ = ratio of gassed power to ungassed power, d = density of the ungassed liquid, D = impeller diameter, K = constant of proportionally for a given type of impeller, and N = rotational speed of the impeller. Thus, the power required to produce the dispersion is proportional to the shaft speed cubed. Based on the changes in shaft speed required for equivalent dispersion at higher liquid flow rates through the motionless mixer (compare Runs 30 and 34), approximately 2 to 2.4 times the agitator power is required with the impeller agitator-sparge ring system than with the agitator-motionless mixer system.

At low liquid flow rates (0.762 metres/sec) (2.5 ft/sec), no substantial improvement in dispersion was observed comparing the agitator-sparge ring system with the motionless mixer-agitator system. It was observed that the location of the outlet of motionless mixer 40.64cm (16 inches) from the inlet to the agitator tank in this experimental setup was too far for the predispersion to travel at low liquid flow rates before substantial coalescence occurred. Thus, it is believed that locating the motionless mixer at the inlet to the tank would result in higher levels of dispersion for the motionless mixer-agitator system for equivalent power input than for the agitator-sparge ring system even at low liquid flow rates. At 360 rpm and above, visual observation was an inadequate method of discerning any differences since at that impeller speed, there was sufficient power input into the tank to disperse effectively the gas at all liquid flow rates.

As seen from a comparison of the test runs, much less power is required to maintain a dispersion in an agitated tank than is required to create the dispersion by conventional impeller agitation alone. The power requirements for the agitator with predispersion by the motionless mixer can be as little as 40-50% of the power required for producing the dispersion by conventional means. This reduction in power, even when the power required to operate the motionless mixer is taken into account is significantly less (approximately one-half to two-thirds) than a conventional impeller agitator-sparge ring system. The ability to operate a process with a smaller impeller agitator in combination with a motionless mixer can result in

reduced operating costs (lower power consumption) and reduced capital equipment costs as compared with the larger impeller agitator which would be conventionally required. The system embodying this invention also provides the advantages of independently controlled production of the gas-liquid dispersion followed by bulk mixing. Additionally, the plug flow characteristics of a motionless mixer coupled with the backmix flow and residence time characteristics of the impeller agitator combine for an efficient and flexible system adaptable to a wide range of gas-in-liquid dispersion processes.

CLAIMS

1. Apparatus for producing and maintaining a dispersion of a gas phase in a liquid phase comprising; conduit means (16) in fluid communication with a tank means (11); said conduit means having at least one liquid inlet (34) and at least one gas inlet (44), and disposed in said conduit means downstream from said gas and liquid inlets, motionless mixing means (24) for dispersing the gas phase into the liquid phase; said tank means having means (12) to agitate the gas-in-liquid dispersion and maintain said dispersion for a time sufficient for mass transfer to occur between phases.

2. The apparatus claimed in claim 1, in which said motionless mixing means (24) comprises a plurality of alternating left-handed and right-handed curved, sheet-like elements.

3. The apparatus claimed in claim 1 or 2, in which said conduit means comprises a plurality of conduits (16, 18, 20, 22) extending into the bottom portion of said tank means (11), each conduit containing a motionless mixing means (24, 26, 28, 30 respectively).

4. The apparatus claimed in claim 3, in which each of said conduits (16, 18, 20, 22) has a gas inlet (44, 42, 40, 38, respectively).

5. The apparatus claimed in any preceding claim, including means (48) to recycle liquid from said tank means (11) to said conduit means.

6. The apparatus claimed in claim 5, including means (46) for removing gas entrained in liquid removed from said tank means (11).

7. In combination:

motionless mixing means (24) for predispersing a gaseous phase into a liquid phase, and

an agitated tank means (11, 12) in fluid connection with said motionless mixing means (24) for maintaining the gas-in-liquid dispersion for a time sufficient for mass transfer between phases to occur.

8. The method of producing and maintaining a dispersion of a gaseous phase in a liquid phase comprising the steps of,

injecting said gaseous phase into said liquid phase and passing said phases through a conduit (16) containing a plurality of curved sheet-like elements (24) extending longitudinally within said conduit and each having a curvature to turn the direction of phases flowing through said conduit, said elements being arranged in alternating right- and left-handed curvature groups, the leading and trailing edges of such groups being disposed at a substantial angle to each other, to predisperse said gaseous phase into said liquid phase, and

introducing the dispersion into an agitated tank (11, 12) to maintain said dispersion for a time sufficient for mass transfer to occur between the phases.

9. The method claimed in claim 8, in which said liquid phase also contains suspended particulate solids.

10. The method claimed in claim 9, in which said gaseous phase is an oxygen-containing gas which chemically reacts with said particulate solids.

11. The method claimed in claim 8, in which said gaseous phase is an oxygen-containing gas, and said liquid phase contains biological fermentation products, or an aromatic hydrocarbon compound, or aerobically treatable biological waste products.

12. The method claimed in claim 8, in which said gaseous phase is a hydrogen-containing gas, and said liquid phase contains an unsaturated hydrocarbon compound.

13. The method claimed in any of claims 8 to 12, in which said dispersion is introduced into the bottom portion of said tank.

14. A method of producing and maintaining a dispersion of a gas in a liquid in an agitated tank comprising the steps of, injecting said gas into said liquid and passing the mixture through an elongated, pipe-like turbulence-promoting device (16, 24) having substantially plug flow characteristics to create a dispersion of said gas in said liquid, discharging said dispersion adjacent to an impeller (12) in an agitated mixing tank (11) containing said liquid, and operating said impeller to further distribute said dispersion throughout said tank.

15. The method claimed in claim 14, in which said step of injecting gas into said liquid provides the principal means by which said gas is introduced into said agitated tank.

BAD ORIGINAL

FIG-1

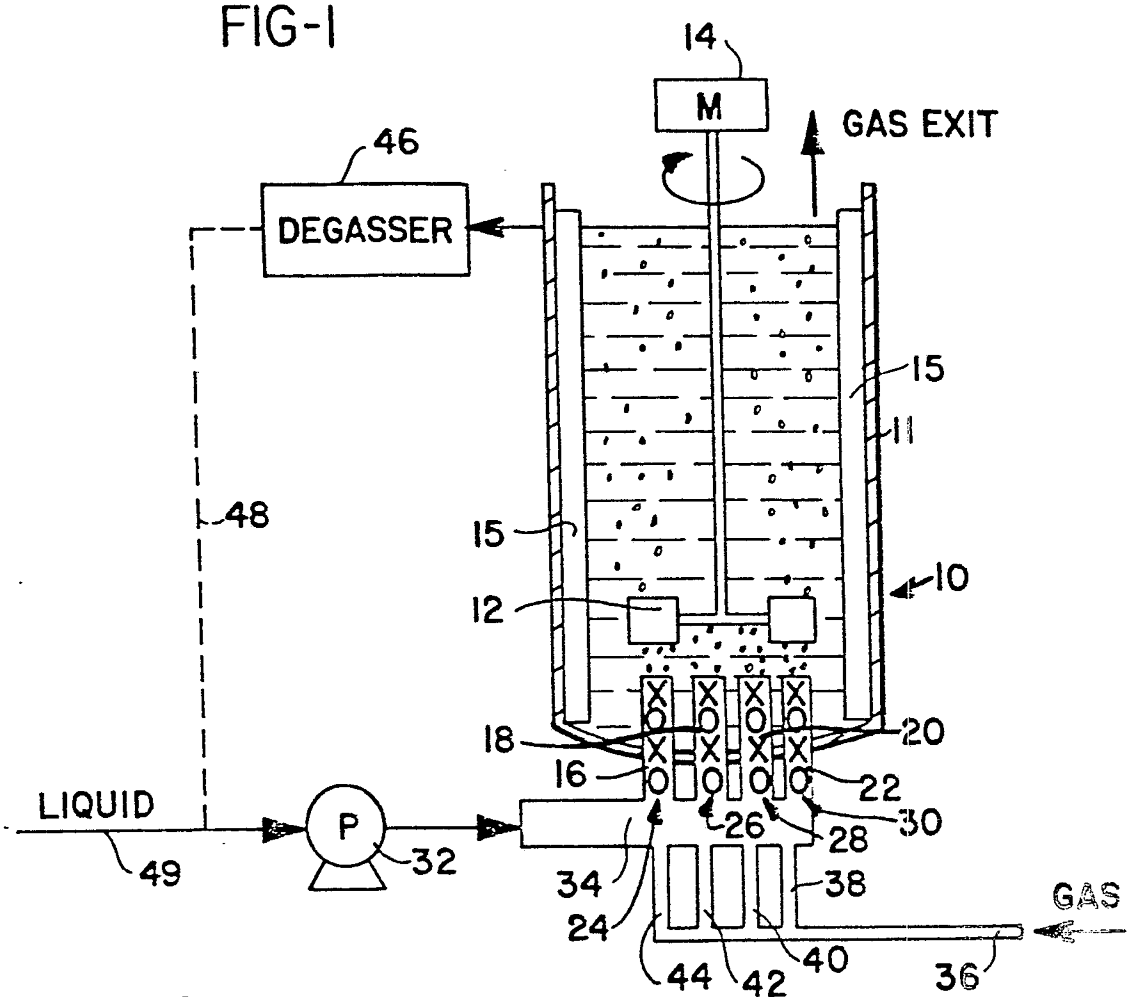


FIG-2

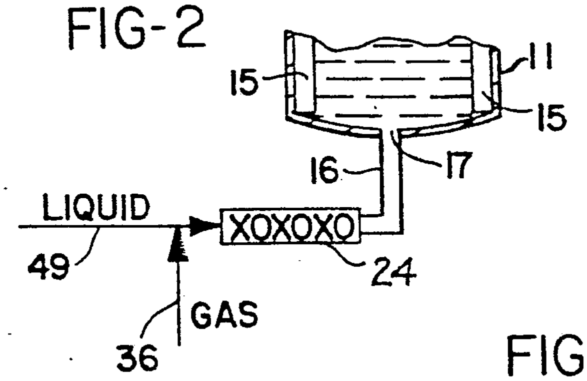


FIG-3

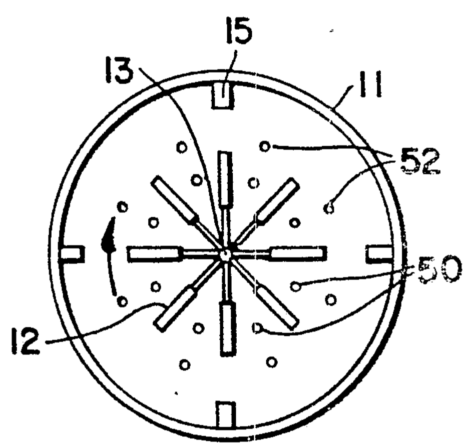

0017451

European Patent Office

# EUROPEAN SEARCH REPORT

Application number

EP 80 30 0991.9

| Category | Citation of document with indication, where appropriate, of relevant passages | Relevant to claim | CLASSIFICATION OF THE APPLICATION (Int. Cl.3) |
|---|---|---|---|
| | US - A - 3 452 966 (L. SMOLSKI)<br>* claims 9, 10; column 1, lines 30 to 46; fig. 1, 2 *<br>-- | 1,3,4,<br>8-11,<br>13,15 | B 01 F 3/04 |
| | US - A - 3 852 384 (J.E. BEARDEN)<br>* column 1, lines 6 to 10; column 6; fig. 2, 8 *<br>-- | 1,4,<br>8-11,<br>13,15 | |
| | US - A - 3 915 887 (OKABE et al.)<br>* claim 1; fig *<br>-- | 1,8,14 | TECHNICAL FIELDS SEARCHED (Int.Cl.3) |
| | US - A - 3 969 446 (G.C. FRANKLIN,JR.)<br>* columns 6, 7; fig. 1, 2, 4 *<br>-- | 1-4,7,<br>8,13-15 | B 01 F 3/04<br>B 01 F 5/00<br>B 01 F 13/02<br>C 02 F 1/74<br>C 02 F 7/00<br>C 05 F 3/06 |
| | GB- A - 1 254 179 (POLCON)<br>* claims 8, 9; page 1, lines 21 to 42; fig. 1, 2 *<br>-- | 1,3,4,<br>8-11,<br>13,15 | |
| A | US - A - 4 074 363 (J.C. CROFT)<br>* fig. 1 *<br>-- | | |
| A | GB - A - 1 282 389 (PRECEDES SEM)<br>* fig. 1 *<br>-- | | CATEGORY OF CITED DOCUMENTS<br>X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| A | GB - A - 1 381 968 (J.R. KAELIN)<br>* complete document *<br>-- | | |
| A | DE - A1 - 2 500 225 (ATARA)<br>* fig. 1 *<br>-- ./.. | | &: member of the same patent family,<br>corresponding document |

X The present search report has been drawn up for all claims

| Place of search | Date of completion of the search | Examiner |
|---|---|---|
| Berlin | 03-07-1980 | KÜHN |

EPO Form 1503.1 06.78

European Patent Office

# EUROPEAN SEARCH REPORT

Application number
EP 80 30 0991.9



| DOCUMENTS CONSIDERED TO BE RELEVANT | | | CLASSIFICATION OF THE APPLICATION (Int. Cl.3) |
|---|---|---|---|
| Category | Citation of document with indication, where appropriate, of relevant passages | Relevant to claim | |
| A | DE - U1 - 7 802 091 (G. APEL et al.)<br>* fig. 1 *<br>---- | | |
| | | | TECHNICAL FIELDS SEARCHED (Int. Cl.3) |